# EUROPEAN PATENT APPLICATION

(11) **EP 0 903 295 A1**
(43) Date of publication of application: **24.03.1999**
(21) Application number: 98203202.1
(22) Date of filing: 23.09.1998
(51) Int. Cl.: B65B 39/00, F16K 3/02

(54) **Metering device for fluent material and valve for this device**

(30) Priority: 23.09.1997 NL 1007100
(71) Applicant: Tetra Pak B.V., 3430 AM Nieuwegein (NL)
(72) Inventor: Van Zanten, Jacob Nicolaas, 3705 SN Zeist (NL)
(74) Representative: de Bruijn, Leendert C.

(57) **Abstract**

A metering device for metering a product which is able to flow, in particular a dairy product such as yoghurt, comprises a line (9) having at least one valve for delivering a portion of the said product. Each valve (3,6) is a slide valve, the valve body (11) of which can be displaced transversely with respect to the line (9). The line has two valves (3,6) which lie one behind the other in the direction of flow of the product and can be actuated independently of one another, which two valves (3,6) delimit a volume which determines a portion of the product, which portion can be delivered when the final valve (6), as seen in the direction of flow, is opened.

## Description

The invention relates to a metering device for metering a product which is able to flow, in particular a dairy product such as yoghurt, comprising a line having at least one valve for delivering a portion of the said product.

A metering device of this kind is known. It is used, for example, in automatic filling devices for dispensing dairy products. These may in particular be viscous dairy products, such as yoghurt. A product such as yoghurt has to be metered with care. If a product of this nature is treated too roughly, it loses viscosity, so that the nature of the product is affected.

A problem which arises with the known metering device relates to hygiene. In practice, it has been found that it is not sufficiently possible to operate the metering device so hygienically that it can be used to fill pots in such a manner that they will keep for a longer time than has hitherto been possible. As a result, the pots which have been filled using this known metering device have only a very limited shelf life, and therefore have to be sold very quickly.

The object of the invention is to provide a metering device which does not have this drawback. This object is achieved by the fact that each valve is a slide valve, the valve body of which can be displaced transversely with respect to the line.

Although the slide valves used in the metering device according to the invention also have an influence on the product to be metered, owing to their opening and closing movements, the resultant movements in the product, such as yoghurt, are considerably reduced. There is virtually no loss of quality in the product. Particularly in the case of a product such as yoghurt, the viscosity is retained.

The device according to the invention may, in a known manner, be designed with two valves which lie one behind the other in the direction of flow of the product and can be actuated independently of one another, which two valves delimit a volume which determines a portion of the product, which portion can be delivered when the final valve, as seen in the direction of flow, is opened.

The valve body of the slide valves forms an important component of the metering device according to the invention. Correct design of this valve is a decisive factor in maintaining the quality and hygiene of the treated product. In this respect, preference is given to a design in which each valve comprises a disc-like valve body and a casing having a slot in which the valve body is displaceable, which casing has two mutually opposite openings which each open out into the slot and are each connected to line parts.

The disc-like valve body is relatively thin, so that the adverse effect when it is moved into the product is minor. The only movement is a rectilinear movement which is parallel to its surfaces in the embodiment in which each valve body has two essentially planar, parallel surfaces which face away from one another, and each surface has a surrounding seal which, in the closed position of the valve body, surrounds the associated opening in the casing in a sealing manner.

The seals which are situated on these surfaces completely surround the openings in the mutually facing walls of the casing, so that there is no possibility of leakage. Wear to the seals can remain very limited, owing to the uniform movements of the valve body in the casing.

Each seal may be composed of a relatively hard, wear-resistant shell and a relatively soft, resilient core, in which case the shell, as seen in cross-section, comprises an annular section which is not continuous and two lips which are provided at one end of the annular section and are parallel to one another.

The seal can be reliably held in place by means of these lips. For this purpose, the two lips are held pressed together between a compression flange and a base body of a valve body, and the annular section on one side is supported on the base body and on the other side extends to beyond the compression flange, as seen in the direction which is transverse to the planar surfaces of the valve body.

In order to achieve a service life which is as long as possible, the annular section is relatively thick at its part which extends beyond the compression flange. That surface of the ring which can be displaced along the adjacent wall of the casing is consequently also strong enough to retain its dimensions when it is displaced across the opening, in which areas it is temporarily unsupported.

The valve body may be connected, on its circumference, to an actuating rod which is guided, in a sealed manner, through a block which is connected in a sealed manner to the casing. This block may have two sealing rings which are situated at a distance from one another and interact with the actuating rod, between which sealing rings there is a chamber to which a disinfecting agent can be fed.

Any product residues which nevertheless still escape via the seals and could pass into the block and the further actuation components can be rendered harmless with the aid of the disinfecting agent. As a result, it is possible to maintain hygienic conditions.

The invention also relates to a valve for the metering device described above.

The invention will be explained in more detail below with reference to an exemplary embodiment of the metering device and valve according to the invention which is illustrated in the figures, in which:
Figure 1 shows a metering device according to the invention with two valves.
Figure 2 shows detail II from Figure 1.
Figure 3 shows cross-section III-III from Figure 2.
Figure 4 shows detail IV from Figure 1.
Figure 5 shows detail V from Figure 2.
Figure 6 shows a detail of the seal before it is attached.

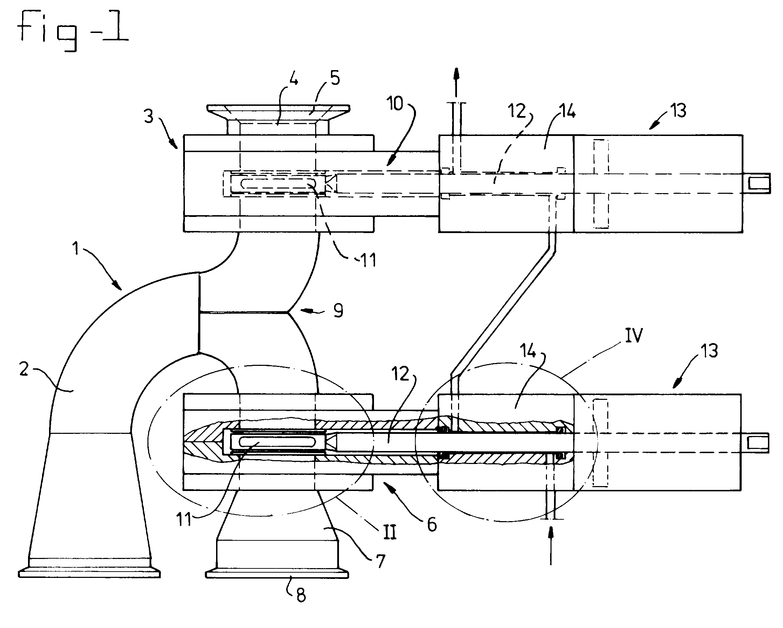

The metering device which is illustrated in Figure 1 and is used to meter, by way of example, a yoghurt product comprises an essentially T-shaped piece of pipe 1, the limb 2 of which is curved. The limb 2 is connected to a known suction/pressure pump (not shown in more detail) and, when the valve 3 is open, is able to draw in a quantity of product via piece of pipe 4. This piece of pipe 4 is connected, via flange 5, to a feedline (not shown in more detail) of the metering device.

After a quantity of product has been drawn in, valve 3 is closed; then, valve 6 is opened, and a portion of the product can be delivered via piece of pipe 7. For this purpose, piece of pipe 7 is connected, via flange 8, to a discharge line, which is likewise not shown in more detail and to which, by way of example, a container to be filled, such as a pot, is connected.

The volume between the valves 3, 6 in the piece of pipe 9 is defined by the stroke of the pump.

The valves 3, 6 are identical and comprise a valve casing 10 in which the disc-like valve body 11 is displaceable. Valve 3 is shown as seen from the outside, while valve 6 is shown partially in section.

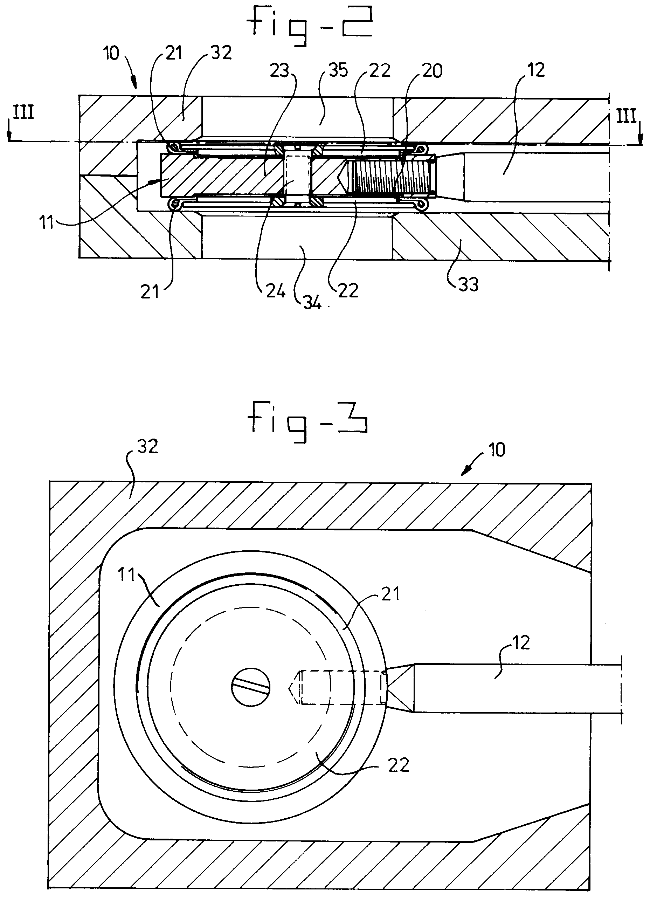

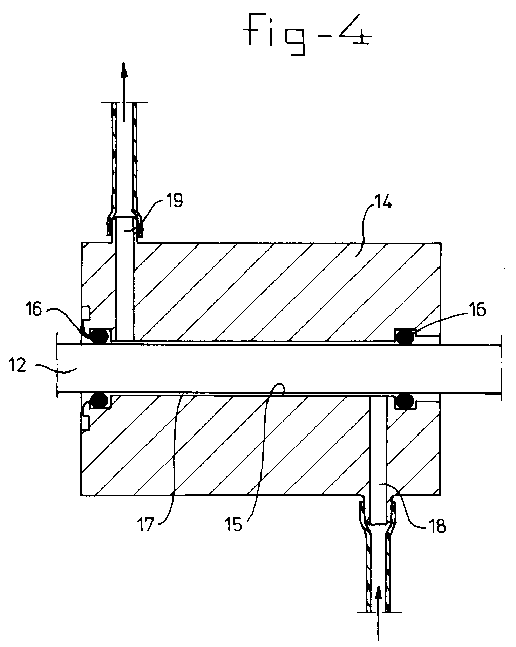

Via an actuating rod 12, each valve body 11 is connected to a piston/cylinder device 13 which produces a reciprocating movement. Piston rod 12 is guided through disinfection block 14, as also illustrated, on a larger scale, in the cross-section shown in Figure 4. This disinfection block 14 comprises a bore 15, the diameter of which is slightly greater than the diameter of the actuating rod 12. Furthermore, seals 16, between which a chamber 17 is defined, are accommodated in the disinfection block 14. A feedline 18 and a discharge line 19 open out into this chamber 17. Via these lines, 18, 19, a disinfecting agent (cf. the arrows) can be guided through the chamber 17. Any product residues entrained, such as yoghurt, can be discharged by this means, while at the same time the actuating rod 12 is disinfected.

As a result of this feature, the product to be metered can be treated so hygienically that a longer shelf life is guaranteed. An advantage of this is that the product package can be stored, for example, for a week longer.

In the cross-section shown in Figures 2 and 3, it can be seen that the actuating rod 12 is connected, by means of screw connection 20, to the disc-like valve body 11. On its two planar sides, this disc-like valve body has identical surrounding seals 21 which are each held pressed onto a base body 23 by means of a compression flange 22. These components are kept pressed firmly together by means of the bolt structure 24.

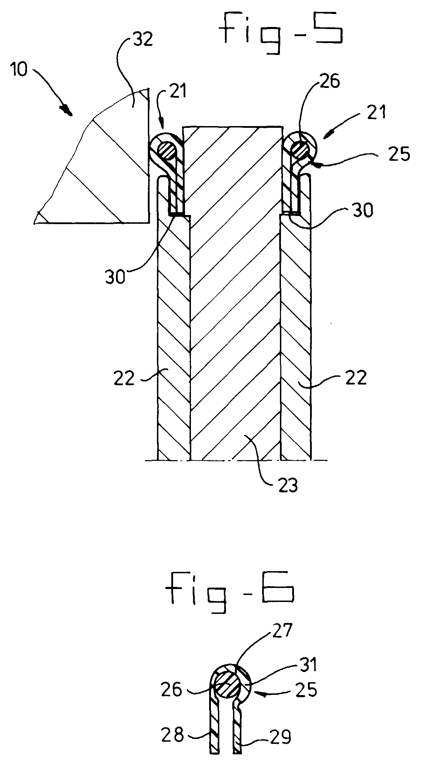

As can be seen in particular from the cross-section shown in Figures 5 and 6, each seal comprises a relatively hard, wear-resistant shell 25 with a relatively soft, resilient core 26. When seen in cross-section, each shell has an annular section 27, which is not continuous, and lips 28, 29 which are each provided at one end of the annular section 27. These lips 28, 29 are accommodated in a peripheral recess 30 in each compression flange 22 and can thus be kept pressed firmly against the base body 23. It can be seen in Figures 5 and 6 that the annular section 27, in the load-free state, extends to beyond the associated compression flange 22. This section 31 is relatively thick, so that it has a long service life in terms of wear resistance.

In the installed position of the valve, the seals 21, in particular the annular sections 27 thereof, are compressed between the base body 23 and an opposite wall 32 of the casing 10. As a result, an excellent sealing action is ensured, with the seal, in the pushed-in position of the valve, extending around the entire circumference of the concentric openings 33, 34.

## Claims

1. Metering device for metering a product which is able to flow, in particular a dairy product such as yoghurt, comprising a line (9) having at least one valve for delivering a portion of the said product, characterized in that each valve (3, 6) is a slide valve, the valve body (11) of which can be displaced transversely with respect to the line (9).

2. Metering device according to Claim 1, in which the line has two valves (3, 6) which lie one behind the other in the direction of flow of the product and can be actuated independently of one another, which two valves (3, 6) delimit a volume which determines a portion of the product, which portion can be delivered when the final valve (6), as seen in the direction of flow, is opened.

3. Metering device according to Claim 1 or 2, in which each valve (3, 6) comprises a disc-like valve body (11) and a casing (10) having a slot in which the valve body (11) is displaceable, which casing (10) has two mutually opposite openings (34, 35) which each open out into the slot and are each connected to line parts (4, 7).

4. Metering device according to Claim 3, in which each valve body (11) has two essentially planar, parallel surfaces which face away from one another, and each surface has a surrounding seal (21) which, in the closed position of the valve body (11), surrounds the associated opening (34, 35) in the casing (10) in a sealing manner.

5. Metering device according to Claim 1, 2, 3 or 4, in which the casing (10) has two essentially planar, parallel walls (32, 33) which face towards one another and are provided with openings (34, 35) which are positioned concentrically opposite one another.

6. Metering device according to Claim 4 or 5, in which each seal (21) is composed of a relatively hard, wear-resistant shell (25) and a relatively soft, resilient core (26).

7. Metering device according to Claim 6, in which the shell (25), as seen in cross-section, comprises an annular section (31) which is not continuous and two lips (28, 29) which are provided at one end of the annular section (27) and are parallel to one another.

8. Metering device according to Claim 7, in which the two lips (28, 29) are held pressed together between a compression flange (22) and a base body (23) of a valve body (11), and the annular section (27) on one side is supported against the base body (23) and on the other side extends to beyond the compression flange (22), as seen in the transverse direction to the planar surfaces of the valve body (11).

9. Metering device according to Claim 8, in which the annular section (27) is relatively thick at its part (31) which extends beyond the compression flange (22).

10. Metering device according to Claim 7 or 8, in which the relatively soft, resilient core (26) has a circular cross-section.

11. Metering device according to one of the preceding claims, in which the valve body (11) is connected, on its circumference, to an actuating rod (12) which is guided, in a sealed manner, through a block (14) which is connected in a sealed manner to the casing (10).

12. Metering device according to Claim 1, in which the block (14) has two sealing rings (16) which are situated at a distance from one another and interact with the actuating rod (12), between which sealing rings (16) there is a chamber (17) to which a disinfecting agent can be fed.

13. Metering device according to one of the preceding claims, in which the two valves are accommodated in a T-shaped piece of pipe, and the limb (2) of the said T-shaped piece of pipe (9) can be connected to a pump for drawing in a portion when the first valve (3) is opened and for expelling a portion when the second valve (6) is opened.

14. Valve for a metering device according to one of the preceding claims, comprising a casing (10) with a slot which is delimited by two parallel walls (32, 33) which face towards one another and each have an opening (34, 35), which openings are aligned with one another, in which slot a disc-like valve body (11) can be displaced between a position in which the openings (34, 35) are not connected to one another and a position in which the said openings (34, 35) are unblocked.

15. Valve according to Claim 14, in which each valve body (11) has two essentially planar, parallel surfaces which face away from one another, and each surface has a surrounding seal (21) which, in the closed position of the valve body (11), surrounds the associated opening (34, 35) in the casing (10) in a sealing manner.

16. Valve according to Claim 15, in which each seal (21) is composed of a relatively hard, wear-resistant shell (25) and a relatively soft, resilient core (26).

17. Valve according to Claim 16, in which the shell (25), as seen in cross-section, comprises an annular section (27) which is not continuous and two lips (28, 29) which are each provided at one end of the annular section (17) and are parallel to one another.

18. Valve according to Claim 17, in which the two lips (28, 29) are held pressed together between a compression flange (22) and a base body (23) of a valve body (11), and the annular section (27) on one side is supported on the base body (23) and on the other side extends to beyond the compression flange (22), as seen in the direction which is transverse to the planar surfaces of the valve body.

19. Valve according to Claim 18, in which the annular section (27) is relatively thick at its part (31) which extends beyond the compression flange.

20. Valve according to Claim 16, 17, 18 or 19, in which the relatively soft, resilient core (26) has a circular cross-section.
